Europäisches Patentamt

European Patent Office

Office européen des brevets

(19)

(11) **EP 1 131 653 B1**

(12) **EUROPÄISCHE PATENTSCHRIFT**

(45) Veröffentlichungstag und Bekanntmachung des Hinweises auf die Patenterteilung:
**30.03.2005 Patentblatt 2005/13**

(21) Anmeldenummer: **99962156.8**

(22) Anmeldetag: **24.11.1999**

(51) Int Cl.$^7$: **G01T 1/167**, G01T 7/00

(86) Internationale Anmeldenummer:
**PCT/EP1999/009074**

(87) Internationale Veröffentlichungsnummer:
**WO 2000/031566 (02.06.2000 Gazette 2000/22)**

(54) **VERFAHREN UND EINRICHTUNG ZUM MESSEN DER RADIOAKTIVEN KONTAMINATION EINES MESSOBJEKTES**

METHOD AND DEVICE FOR MEASURING THE RADIOACTIVE CONTAMINATION OF A TEST OBJECT

PROCEDE ET DISPOSITIF POUR MESURER LA CONTAMINATION RADIOACTIVE D'UN OBJET DE MESURE

(84) Benannte Vertragsstaaten:
**AT BE CH CY DE DK ES FI FR GB GR IE IT LI LU MC NL PT SE**

(30) Priorität: **25.11.1998 DE 19854430**

(43) Veröffentlichungstag der Anmeldung:
**12.09.2001 Patentblatt 2001/37**

(73) Patentinhaber: **Thermo Electron (Erlangen) GmbH**
**91056 Erlangen (DE)**

(72) Erfinder: **IWATSCHENKO-BORHO, Michael**
**D-91058 Erlangen (DE)**

(74) Vertreter: **Mörtel & Höfner**
**Patentanwälte**
**Blumenstrasse 1**
**90402 Nürnberg (DE)**

(56) Entgegenhaltungen:
**DE-A- 19 711 124      GB-A- 1 079 153**
**US-A- 4 016 418       US-A- 5 083 026**

EP 1 131 653 B1

**Beschreibung**

Die Erfindung bezieht sich auf ein Verfahren und eine Einrichtung zum Messen einer Co-60 als Leitnuklid enthaltenden radioaktiven Kontamination eines Messobjektes.

Aus "Atomwirtschaft", Oktober 1992, 491 ist eine Einrichtung zum Messen der radioaktiven Kontamination eines Messobjektes, beispielsweise eines in einer kerntechnischen Anlage eingesetzten Werkzeuges, bekannt, bei dem das zu überprüfende Objekt in eine Messkammer eingebracht wird, die von großflächigen Plastik-Szintillationsdetektoren umgeben ist. Mit dieser Anordnung wird eine integrale Zählrate bestimmt, die als Maß für die Oberflächenkontamination dient. Mit einer solchen, integralen Messung kann allerdings nicht beurteilt werden, ob es sich hierbei um eine natürliche Radioaktivität des untersuchten Messobjektes oder um eine echte Kontamination mit Spalt- und Aktivierungsprodukten, wie sie in kerntechnischen Anlagen auftreten, handelt. Ebenso führen Schwankungen der Umgebungsstrahlung zu einer Verfälschung des Messwertes, die nur durch aufwendige Bleiabschirmung reduziert werden kann.

Insbesondere bei älteren Kernkraftwerken ist häufig das Isotop Co-60 Leitnuklid, d.h. anhand einer Co-60 Messung und eines bekannten, beispielsweise mit Gammaspektroskopie ermittelten Nuklidvektors (d. h. Probe mit einer vorgegebenen Nuklidzusammensetzung) wird unter der Annahme einer gleichbleibenden Nuklidzusammensetzung auf die Gesamtaktivität eines kontaminierten Gegenstandes geschlossen. Eine nuklidspezifische Messung wird üblicherweise, meist im Labor, mit hochauflösenden Ge-Detektoren, durchgeführt. Nachteilig sind hier die relativ hohen Kosten dieser Detektoren und die zur Messung erforderlichen langen Messzeiten. Bei Messungen vor Ort besteht darüber hinaus das Problem der Umgebungsstrahlung: Der Detektor kann nicht unterscheiden, ob die Strahlung von dem interessierenden Objekt oder aus der weiteren Umgebung stammt, sofern es sich um das gleiche Nuklid handelt. Abschirmungen aus Blei können meist dieses Problem aus Kosten- und Gewichtsgründen nur bei geometrisch kleinen Proben, nicht jedoch bei größeren Gegenständen, beispielsweise Lagerfässern oder fest installierten Anlagenteilen, lösen.

Aus der US-Patentschrift 4,016,418 ist ein Verfahren zum Messen der auf J-125 oder Co-60 zurückgehenden Aktivität bekannt, bei dem ausgenutzt wird, dass beide Isotope gleichzeitig zwei Gammaquanten emittieren. Bei diesem bekannten Verfahren werden in einem einzigen Detektor mehrere Energiefenster gesetzt, mit denen die zu einem einzelnen Gammaquant gehörenden Nachweisimpulse und die zu zwei gleichzeitig detektierten Gammaquanten gehörenden und deshalb eine größere Impulshöhe aufweisenden Nachweisimpulse diskriminiert werden: Aus der Gesamtzählrate sowie aus den zu den verschiedenen Energiefenstern gehörenden Einzelzählraten kann dann die Aktivität der Probe bestimmt werden. Auch bei dieser Anordnung lässt sich jedoch nicht vermeiden, dass natürliche radioaktive Bestandteile das Messresultat verfälschen. Außerdem ist hierzu ein energieselektiver Detektor erforderlich, mit dem eine Trennung der beiden Energiefenster möglich ist.

Aus der GB-Patentschrift 1,079,153 ist es außerdem grundsätzlich bekannt, mit Hilfe eines Koinzidenzmessverfahrens das Auflösungsvermögen eines zur Spektroskopie verwendeten Halbleiterdetektors zu verbessern. Hierzu wird dem Halbleiterdetektor ein NaJ-Detektor zugeordnet, mit dem die aufgrund des Compton-Effekts im Halbleiterdetektor rückgestreuten Gammaquanten erfasst werden. Mit Hilfe einer Koinzidenzschaltung werden nur koinzidente Ereignisse erfasst, so dass der Anteil der Hintergrundstrahlung reduziert und damit die Messempfindlichkeit gesteigert wird.

Bei preiswerteren Detektoren mit schlechteren spektroskopischen Eigenschaften, beispielsweise organische Szintillationsdetektoren, tritt außerdem das Problem auf, dass eine zufriedenstellende Trennung zwischen den natürlichen radioaktiven Bestandteilen und einer echten Kontamination mit Spalt- und Aktivierungsprodukten des zu untersuchenden Materials nicht möglich ist.

Der Erfindung liegt nun die Aufgabe zugrunde, ein Verfahren und eine Einrichtung zum Messen einer Co-60 als Leitnuklid enthaltenden radioaktiven Kontamination eines Messobjektes anzugeben, das kostengünstig und mit einfachen technischen Maßnahmen vor Ort durchgeführt werden kann. Außerdem liegt der Erfindung die Aufgabe zugrunde, eine Einrichtung zur Durchführung des Verfahrens anzugeben.

Die erstgenannte Aufgabe wird gemäß der Erfindung gelöst mit einem Verfahren mit den Merkmalen des Patentanspruches 1. Bei dem Verfahren zum Messen einer Co-60 als Leitnuklid enthaltenden radioaktiven Kontamination eines Messobjektes werden die in zwei Gammadetektoren koinzident detektierten Gammaquanten ermittelt. Die koinzidenten Ereignisse sind dann ein Maß für durch künstliche radioaktive Strahlung verursachte Aktivität des Messobjektes und damit ein Maß für dessen radioaktive Kontamination.

Die Erfindung beruht auf der Überlegung, dass das für eine Vielzahl von Anwendungsfällen als Leitnuklid geeignete Co-60 bei jedem radioaktiven Zerfall gleichzeitig je ein Gammaquant von 1173 keV und 1332 keV aussendet. Mit Hilfe von zumindest zwei zum Nachweis dieser Gammaquanten geeigneten Gammadetektoren können nun impulsauslösende Ereignisse erfasst werden, die koinzident, d.h. gleichzeitig bzw. innerhalb eines geeignet vorgegebenen Zeitfensters in beiden Gammadetektoren auftreten. Diese koinzidenten Ereignisse sind nun bis auf zufällige Koinzidenzen durch den Zerfall eines radioaktiven Isotops verursacht, das gleichzeitig zwei Gammaquanten in unterschiedliche Richtungen emittiert. Die Anzahl bzw. die Häufigkeit dieser koinzidenten Ereignisse ist dann ein Maß für die Anzahl der auf dem oder im Gegenstand befindlichen radioaktiven Isotope dieses Typs. Ist dieses Isotop als Leitnuklid für einen bestimmten Typ der radioaktiven Kontamination geeignet, kann somit auch die Gesamtkontamination des Gegenstandes bestimmt werden.

Koinzidenzmessungen zum Nachweis von Ereignissen, bei denen zeitgleich zwei Gammaquanten entstehen, wie beispielsweise bei der Positronenvernichtung, sind grundsätzlich bekannt. So ist beispielsweise in "Nukleonik", 10, S. 64, ein Verfahren zur Bestimmung der Li-6-Konzentration offenbart, bei dem die von aus Li-6 gebildeten F-18 ausgesandten Positronen über die bei deren Vernichtung entstehenden Vernichtungsquanten durch eine Koinzidenzmessung nachgewiesen werden. Hierbei handelt es sich jedoch um eine Anwendung, die speziell auf den Nachweis von Li-6 zugeschnitten ist.

Eine Koinzidenzmessung zum Nachweis spezieller Isotope, bei deren Zerfall mehr als zwei Gammaquanten entstehen, ist aus der US-Patentschrift 5,083,026 bekannt. Ein solches Isotop emittiert beispielsweise ein Positron, das anschließend zu einer Vernichtungsstrahlung mit zwei Gammaquanten führt. Bei der Emission des Positrons verbleibt der Kern in einem angeregten Zustand und kehrt durch Emission eines Gammaquants in seinen Grundzustand zurück. Durch die Messung koinzidenter oder nahezu koinzidenter Ereignisse in drei Detektoren kann die Hintergrundstrahlung weitestgehend unterdrückt werden. Ein solches Verfahren ist speziell für den Nachweis von mit entsprechenden Isotopen markierten Makromolekülen vorgesehen.

Beide bekannten Koinzidenzmessverfahren sind jedoch für jeweils spezielle labortechnische Anwendungsfälle konzipiert und sind für den Nachweis radioaktiver Kontamination, wie sie im Umfeld kemtechnischer Anlagen auftreten kann, weder geeignet noch vorgesehen.

Als Maß für die koinzidenten Ereignisse wird vorzugsweise aus den jeweils in einem Koinzidenzzeitfenster in beiden Gammadetektoren koinzident detektierten Ereignissen eine gemessene Koinzidenzzählrate abgeleitet.

In einer weiteren vorteilhaften Ausgestaltung der Erfindung werden aus den Einzelzählraten der Gammadetektoren eine zufällige Koinzidenzzählrate abgeleitet und von der gemessenen Koinzidenzzählrate zum Bestimmen einer korrigierten Koinzidenzzählrate als Maß für die radioaktive Kontamination abgezogen. Die erwartete Zählrate Z zufälliger Koinzidenzen (zufällige Koinzidenzzählrate) beträgt:

$$Z_{12} = R_1 * R_2 * t_k$$

wobei $R_1$ bzw. $R_2$ die Einzelzählraten in den beiden Energiefenstern und $t_k$ das Koinzidenzzeitfenster ist, das so klein wie möglich gewählt ist. Typisch sind Zeitfenster von etwa 1 µs, vorzugsweise kleiner als 100ns.

Mit Hilfe der zufälligen Koinzidenzzählrate $Z_{12}$ wird dann eine korrigierte Koinzidenzzählrate $K_{12}$ durch die nachfolgende Gleichung bestimmt

$$K_{12} = M_{12} - Z_{12}$$

wobei $M_{12}$ die gemessene Koinzidenzrate $K_{12}$ ist. Diese korrigierte Koinzidenzzählrate $K_{12}$ gibt dann die Zählrate der echten koinzidenten Ereignisse, d.h. der von einem Zerfall stammenden Ereignisse wieder.

Der Zusammenhang zwischen $K_{12}$ und der gesuchten Co-60 Aktivität A ist nun durch

$$K_{12} = \varepsilon_1 * \varepsilon_2 * A$$

gegeben, so dass nach A aufgelöst werden kann, wobei $\varepsilon_1$, $\varepsilon_2$ ($s^{-1}$/Bq) die Einzelnachweiswahrscheinlichkeiten $\varepsilon_1$, $\varepsilon_2$ ($s^{-1}$/Bq) der beiden Gammadetektoren sind. Diese müssen dabei mit Hilfe eines Kalibrierpräparats für die jeweils verwendeten Gammadetektoren und deren geometrische Anordnung zum Messobjekt ermittelt werden.

Für nicht zwischen den Detektoren befindliche Co-60 Kontaminationen (Störstrahlung) ergibt sich nun im Fernfeld eine Entfemungsabhängigkeit mit der 4. Potenz des Abstands der korrigierten echten Koinzidenzrate $K_{12}$, da die Einzelnachweiswahrscheinlichkeiten $\varepsilon_1$, $\varepsilon_2$ jeweils der bekannten quadratischen Abschwächung des wohl bekannten Abstandgesetzes unterliegen. Störquellen, die weiter als einen Abstand in der Größenordnung der Detektordimensionen haben, können damit das beschriebene Messverfahren praktisch nicht mehr systematisch beeinflussen, sondern führen nur über die zufälligen Koinzidenzen zu einer Verschlechterung der statistischen Signifikanz. Dadurch ergibt sich für das erfindungsgemäße Verfahren eine ausgeprägte räumliche Fokussierung, d. h. es werden selektiv nur Ereignisse aus einem kleinen Raumgebiet erfasst.

Vorzugsweise werden zur Messung der Koinzidenzzählrate nur Ereignisse verwendet, die zu einem vorgegebenen Energiefenster gehören, wobei insbesondere die den Gammadetektoren zugeordneten Energiefenster gleich sind.

In einer für die praktische Anwendung besonders vorteilhaften Ausgestaltung sind die Energiefenster zum energieselektiven Nachweis der beim radioaktiven Zerfall von Co-60 entstehenden Gammastrahlung eingestellt. Verwendet man dabei bei Gammadetektoren Energiefenster von jeweils ca. 500 keV bis 1500 keV, so werden keine echten Koinzidenzen von natürlichen Radionukliden (U-238, Th-232 jeweils mit Folgeprodukten, K-40) noch von kosmischer Höhenstrahlung erfasst. Durch die Verwendung eines Energiefensters wird außerdem die zufällige Koinzidenzrate reduziert.

In Anwendungsfällen, in denen die natürliche Radioaktivität vernachlässigt werden kann oder in denen ein Messobjekt mit Selbstabsorption vermessen werden soll, ist es vorteilhaft, die untere Schwelle (Untergrenze des Energiefensters) auf etwa 50 bis 100 keV herabzusetzen, um auch die comptongestreuten Gammaquanten erfassen zu können.

Vorzugsweise werden als Gammadetektoren organische Szintillatoren, insbesondere Plastik- oder Flüssigszintillatoren, verwendet. Diese haben bei hoher Nachweisempfindlichkeit ein ausreichendes energetisches Auflösungsvermögen und sind besonders kostengünstig und können deshalb sehr großvolumig ausgeführt werden. Die Größe und der Abstand der Gammadetektoren wird dabei vorteilhafterweise etwa so groß wie die Ausdehnung des zu messenden Gegenstandes gewählt, wobei die Dicke der Detektoren vorzugsweise zwischen 5 und 10 cm beträgt. Dabei stellt die durch die erfindungsgemäße Koinzidenzmessung eröffnete Möglichkeit, durch künstliche Radioaktivität verursachte radioaktive Kontamination bei hoher Nachweisempfindlichkeit mit preiswerten organischen Plastikszintillatoren, d. h. mit Detektoren durchführen zu können, die ein relativ geringes Energieauflösungsvermögen haben, einen wesentlichen Vorteil der Erfindung dar.

Die mit Hilfe des erfindungsgemäßen Verfahrens gewonnenen Messresultate können außerdem mit anderen im Stand der Technik bei der Aktivitätsüberwachung bekannter Messverfahren kombiniert werden, um so auch andere Nuklide zusätzlich zu erfassen. Insbesondere ist es auch von Vorteil, neben einer integralen Messung zur Erfassung aller Gammastrahlen, das erfindungsgemäße Verfahren mit einem der beispielsweise aus der DE 197 11 124 A1 bekannten Messverfahren zur Erfassung anderer künstlicher Gammastrahlen zu kombinieren.

Die zweitgenannte Aufgabe wird gemäß der Erfindung gelöst mit einer Einrichtung mit den Merkmalen des Patentanspruches 8. Die Einrichtung zum Messen der radioaktiven Kontamination eines Messobjektes enthält zumindest zwei Gammadetektoren sowie einem Koinzidenzzähler zum Ermitteln der mit diesen Gammadetektoren koinzident detektierten Gammaquanten.

Weitere vorteilhafte Ausgestaltungen der erfindungsgemäßen Einrichtung sind in den Unteransprüchen 9 bis 15 wiedergegeben.

Zur weiteren Erläuterung der Erfindung wird auf die Ausführungsbeispiele der Zeichnung verwiesen. Es zeigen:

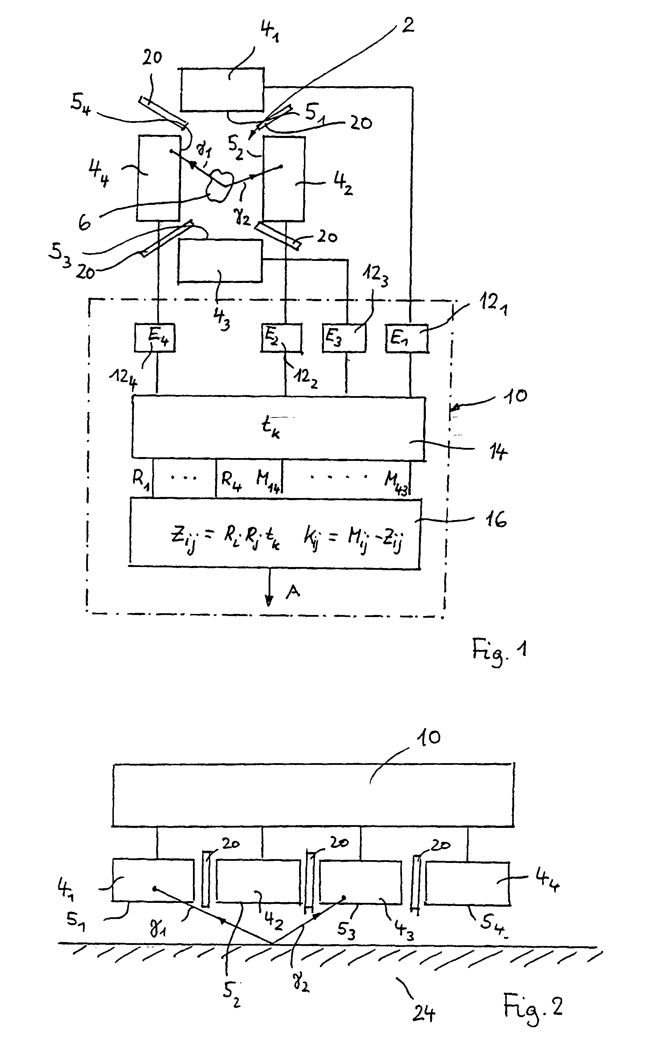

Fig. 1 u. 2  jeweils eine Einrichtung gemäß der Erfindung zum Messen der radioaktiven Kontamination eines transportablen Gegenstandes bzw. eines flächenhaften Anlagenteiles.

Gemäß Fig. 1 wird ein Messraum 2 durch vier Gammadetektoren $4_1$-$4_4$ festgelegt, die mit ihren Eintrittsfenstern $5_1$-$5_4$ jeweils paarweise einander gegenüberliegend angeordnet sind. Die Gammadetektoren $4_1$-$4_4$ dienen zum Nachweis der von einem im Messraum 2 angeordneten Messobjekt 6, beispielsweise ein Lagerfass für kontaminierte Abfallprodukte, Abrissmaterial einer nuklearen Anlage oder eine Person, emittierten Gammaquanten $\gamma_1, \gamma_2$ dienen. Anstelle der in der Figur dargestellten vier Gammadetektoren $4_1$-$4_4$ können auch nur zwei oder drei oder auch mehr als vier Gammadetektoren vorgesehen sein. Wesentlich ist, dass zumindest zwei Gammadetektoren vorhanden sind, die unabhängig voneinander aufgrund der Wechselwirkung mit radioaktiver Strahlung stattfindende Ereignisse detektieren können. Als Gammadetektoren $4_1$-$4_4$ sind vorzugsweise organische Szintittatoren, beispielsweise Plastik- oder Flüssigkeitsszintillatoren, vorgesehen, die kostengünstig mit großen sensitiven Volumina verfügbar sind.

Den Gammadetektoren $4_1$-$4_4$ ist eine Auswerteeinrichtung 10 nachgeschaltet, in der jedem Gammadetektor $4_1$-$4_4$ ein Fensterdiskriminator $12_1$-$12_4$ zugeordnet ist, mit dem jeweils diejenigen Ereignisse (Impulse) selektiert werden, die einem Energiefenster $E_1$-$E_4$ zugeordnet sind. Im Ausführungsbeispiel sind diese Energiefenster $E_1$-$E_4$ alle gleich und so ausgewählt, dass ein sicherer Nachweis der von Co-60 emittierten Gammaquanten $\gamma_1, \gamma_2$ von 1173 keV bzw. 1332 keV möglich ist. Vorzugsweise liegen die Energiefenster $E_1$-$E_4$ jeweils zwischen 500 keV und 1500 keV.

Mit einem Koinzidenzzähler 14 werden nun die zueinander koinzidenten Ereignisse in den Gammadetektoren $4_1$-$4_4$ ausgewertet. Als koinzident werden dabei solche Ereignisse bezeichnet, die innerhalb eines vorgegebenen Koinzidenzzeitfensters oder Zeitabstandes $t_k$ in unterschiedlichen Gammadetektoren $4_1$-$4_4$ stattfinden. Auf diese Weise können bei vier Gammadetektoren $4_1$-$4_4$ sechs Koinzidenzzählraten $M_{ij}$ mit i, j = 1-4 und i ≠ j gemessen werden. Dies geschieht dadurch, dass zu jedem Ereignis, das in einem Gammadetektor $4_i$ stattfindet ein in einem anderen Gammadetektor $4_j$ (i ≠ j) innerhalb des Koinzidenzzeitfensters $t_k$ stattfindendes weiteres Ereignis als koinzident identifiziert wird und auf diese Weise eine gemessene Koinzidenzzählrate $M_{ij}$ bestimmt wird. Zusätzlich zu diesen Koinzidenzzählraten werden außerdem die Einzelzählraten $R_i$ ermittelt. In einer nachgeschalteten Recheneinrichtung 16 wird nun aus den Einzelzählraten $R_i$ und $R_j$ der Gammadetektoren $4_i$ bzw. $4_j$ mit Hilfe der Gleichung

$$Z_{ij} = R_i * R_j * t_k$$

die erwartete zufällige Koinzidenzzählrate $Z_{ij}$ bestimmt. Die (echte) korrigierte Koinzidenzzählrate $K_{ij}$ ergibt sich dann durch die Gleichung

$$K_{ij} = M_{ij} - Z_{ij}.$$

Aus den auf diese Weise berechneten korrigierten Koinzidenzzählraten $K_{ij}$ kann dann die Aktivität A des Gegenstandes 2 berechnet werden. Die hierzu notwendigen Einzelnachwahrscheinlichkeiten $\varepsilon_i$ der Gammadetektoren $4_1$-$4_4$ werden in einer Kalibriermessung ermittelt.

Um unechte Koinzidenzen zu vermeiden, die entstehen können, wenn ein ereignisauslösendes Gammaquant durch Streuung in einen anderen Gammadetektor gelangt und dort ebenfalls ein Ereignis auslöst, sind zwischen den einzelnen Gammadetektoren $4_1$-$4_4$ Bleiabschirmungen 20 angeordnet. Zusätzlich können noch weitere Bleiabschirmungen 22 vorgesehen sein, die den Einfluss der Umgebungsstrahlung auf die Messung verringern.

Im Ausführungsbeispiel gemäß Fig. 2 ist eine Anordnung dargestellt, in der Gammadetektoren $4_1$-$4_4$ hintereinander in einer Reihe angeordnet sind, wobei deren Eintrittsfenster $5_1$-$5_4$ in einer gemeinsamen Ebene liegen. Zwischen den Gammadetektoren $4_1$-$4_4$ befinden sich zur Vermeidung von Fehlmessungen ebenfalls Abschirmungen 20. Die Anordnung nach Fig. 2 ist insbesondere dann von Vorteil, wenn große flächenhafte Anlagenteile 24 auf Oberflächenkontamination untersucht werden müssen.

Bezugszeichenliste

| | |
|---|---|
| 2 | Messraum |
| $4_1$-$4_4$ | Gammadetektor |
| $5_1$-$5_4$ | Eintrittsfenster |
| 6 | Messobjekt |
| 10 | Auswerteeinrichtung |
| $12_1$-$12_4$ | Fensterdiskriminator |
| 14 | Koinzidenzzähler |
| 16 | Recheneinrichtung |
| 20,22 | Abschirmung |
| 24 | Anlagenteil |
| $\gamma_1,\gamma_2$ | Gammaquant |
| $E_1$-$E_4$ | Energiefenster |
| $t_k$ | Koinzidenzzeitfenster |
| $R_1$-$R_4$ | Einzelzählrate |
| $Z_{ij}$ | zufällige Koinzidenzzählrate |
| $K_{ij}$ | Koinzidenzzählrate |
| $M_{ij}$ | gemessene Koinzidenzzählrate |
| A | Aktivität |

**Patentansprüche**

1. Verfahren zum Messen einer radioaktiven Kontamination eines Messobjektes (6,24) mit aus einer kerntechnischen Anlage stammenden, Co-60 als Leitnuklid enthaltenden Spalt- und Aktivierungsprodukten, bei dem mit zumindest zwei Gammadetektoren ($4_1$-$4_4$) vom Messobjekt (6,24) gleichzeitig emittierte Gammaquanten ($\gamma_1,\gamma_2$) nachgewiesen werden, und bei dem die in diesen Gammadetektoren ($4_1$-$4_4$) koinzident detektierten Gammaquanten ($\gamma_1,\gamma_2$) ermittelt werden, wobei aus den jeweils in einem Koinzidenzzeitfenster ($t_k$) in beiden Gammadetektoren ($4_1$-$4_4$) koinzident detektierten Ereignissen eine gemessene Koinzidenzzählrate ($M_{ij}$) abgeleitet und zur Bestimmung der Aktivität (A) herangezogen wird.

2. Verfahren nach Anspruch 1, bei dem aus den Einzelzählraten ($R_i$) der Gammadetektoren ($4_1$-$4_4$) eine zufällige Koinzidenzzählrate ($Z_{ij}$) abgeleitet und von der gemessenen Koinzidenzzählrate -($M_{ij}$) zum Bestimmen einer korrigierten Koinzidenzzählrate ($K_{ij}$) als Maß für die Aktivität (A) abgezogen wird.

3. Verfahren nach einem der vorhergehenden Ansprüche, bei dem zur Messung der Koinzidenzzählrate ($M_{ij}$) nur Ereignisse verwendet werden, die zu einem vorgegebenen Energiefenster ($E_1$-$E_4$) gehören.

4. Verfahren nach Anspruch 3, bei dem die den Gammädetektoren ($4_1$-$4_4$) zugeordneten Energiefenster ($E_1$-$E_4$) gleich sind.

5. Verfahren nach Anspruch 3 oder 4, bei dem die Energiefenster ($E_1$-$E_4$) zum energieselektiven Nachweis der beim radioaktiven Zerfall von Co-60 entstehenden Gammastrahlung ($\gamma_1,\gamma_2$) eingestellt sind.

6. Verfahren nach Anspruch 5, bei dem als Gammadetektoren ($4_1$-$4_4$) organische Szintillationszähler verwendet werden.

7. Einrichtung zum Messen einer Co-60 als Leitnuklid enthaltenden radioaktiven Kontamination eines Messobjektes (6,24), mit zumindest zwei Gammadetektoren ($4_1$-$4_4$) zum Nachweis von vom Messobjekt (6,24) emittierten Gammaquanten ($\gamma_1,\gamma_2$), wobei als Gammadetektoren ($4_1$-$4_4$) organische Szintillationszähler vorgesehen sind, und mit einer Auswerteeinrichtung (10) zum Ermitteln der mit diesen Gammadetektoren ($4_1$-$4_4$) koinzident detektierten Gammaquanten ($\gamma_1,\gamma_2$), die einen Koinzidenzzähler (14) zum Bestimmen einer gemessenen Koinzidenzzählrate ($M_{ij}$) umfasst, sowie mit einer Recheneinrichtung (16) zum Ableiten einer zufälligen Koinzidenzzählrate ($Z_{ij}$) aus den Einzelzählraten ($R_i$) der Gammadetektoren ($4_1$-$4_4$) und zum Bestimmen einer korrigierten Koinzidenzzählrate ($K_{ij}$) durch Bildung der Differenz aus gemessener Koinzidenzzählrate ($M_{ij}$) und zufälliger Koinzidenzzählrate ($K_{ij}$).

8. Einrichtung nach Anspruch 7, bei der die Gammadetektoren ($4_1$-$4_4$) mit ihren Eintrittsfenstern ($5_1$-$5_4$) derart angeordnet sind, dass ein zwischen den Gammadetektoren ($4_1$-$4_4$) befindlicher Messraum (2) zur Aufnahme des Messobjektes (6) gebildet ist.

9. Einrichtung nach Anspruch 7, bei der die Eintrittsfenster ($5_1$-$5_4$) der Gammadetektoren ($4_1$-$4_4$) in einer gemeinsamen Ebene angeordnet sind.

10. Einrichtung nach Anspruch 9, bei der zwischen den Gammadetektoren ($4_1$-$4_4$) eine Abschirmung (20) angeordnet ist.

11. Einrichtung nach einem der Ansprüche 7 bis 10, bei der die Energiefenster ($E_1$-$E_4$) der Gammadetektoren ($4_1$-$4_4$) zum energieselektiven Nachweis der beim radioaktiven Zerfall von Co-60 entstehenden Gammastrahlung ($\gamma_1$, $\gamma_2$) eingestellt sind.

12. Einrichtung nach einem der Ansprüche 7 bis 11, bei der als Gammadetektoren ($4_1$-$4_4$) Plastik- oder Flüssigkeitsszintillationszähler verwendet werden.

**Claims**

1. Method for measuring a radioactive contamination of a measurement object (6, 24) having fission and activation products originating from a nuclear facility and containing Co-60 as indicator nuclide, in the case of which method gamma quanta ($\gamma_1$, $\gamma_2$) emitted simultaneously by the measurement object (6, 24) are detected with the aid of at least two gamma detectors ($4_1$-$4_4$) and in the case of which method the gamma quanta ($\gamma_1$, $\gamma_2$) detected coincidentally in these gamma detectors ($4_1$-$4_4$) are determined, a measured coincidence counting rate ($M_{ij}$) being derived from the events detected coincidentally in each case in a coincidence time window ($t_k$) in the two gamma detectors ($4_1$-$4_4$), and being used to determine the activity (A).

2. Method according to Claim 1, in which a random coincidence counting rate ($Z_{ij}$) is derived from the individual counting rates ($R_i$) of the gamma detectors ($4_1$-$4_4$), and is subtracted from the measured coincidence counting rate ($M_{ij}$) in order to determine a corrected coincidence counting rate ($K_{ij}$) as a measure of the activity (A).

3. Method according to one of the preceding claims, in which only events which belong to a prescribed energy window ($E_1$-$E_4$) are used for measuring the coincidence counting rate ($M_{ij}$).

4. Method according to Claim 3, in which the energy windows ($E_1$-$E_4$) assigned to the gamma detectors ($4_1$-$4_4$) are identical.

5. Method according to Claim 3 or 4, in which the energy windows ($E_1$-$E_4$) are set for the purpose of energy-selective detection of the gamma radiation ($\gamma_1$, $\gamma_2$) produced during the radioactive decay of Co-60.

6. Method according to Claim 5, in which organic scintillation counters are used as gamma detectors ($4_1$-$4_4$).

7. Device for measuring a radioactive contamination, containing Co-60 as indicator nuclide, of a measurement object (6, 24), having at least two gamma detectors (($4_1$-$4_4$) for detecting gamma quanta ($\gamma_1$, $\gamma_2$) emitted by the measurement object (6, 24), organic scintillation counters being provided as gamma detectors ($4_1$, $4_4$), and having an evaluation device (10) for determining the gamma quanta ($\gamma_1$, $\gamma_2$), detected coincidentally with these gamma detectors ($4_1$-$4_4$), which comprises a coincidence counter (14) for determining a measured coincidence counting rate ($M_{ij}$), and having a central processing unit (16) for deriving a random coincidence counting rate ($Z_{ij}$) from the individual counting rates ($R_i$) of the gamma detectors ($4_1$-$4_4$) and for determining a corrected coincidence counting rate ($K_{ij}$) by forming the difference of the measured coincidence counting rate ($M_{ij}$) and random coincidence counting rate ($K_{ij}$).

8. Device according to Claim 7, in which the gamma detectors ($4_1$-$4_4$) are arranged with their entry windows ($5_1$-$5_4$) in such a way that a measurement space (2) located between the gamma detectors ($4_1$-$4_4$) is formed for holding the measurement object (6).

9. Device according to Claim 7, in which the entry windows ($5_1$-$5_4$) of the gamma detectors ($4_1$-$4_4$) are arranged in a common plane.

10. Device according to Claim 9, in which a shield (20) is arranged between the gamma detectors ($4_1$-$4_4$).

11. Device according to one of Claims 7 to 10, in which the energy windows ($E_1$-$E_4$) of the gamma detectors ($4_1$-$4_4$) are set for the purpose of energy-selective detection of the gamma radiation ($\gamma_1$, $\gamma_2$) produced during the radioactive decay of Co-60.

12. Device according to one of Claims 7 to 11, in which plastic or liquid scintillation counters are used as gamma detectors ($4_1$-$4_4$).

**Revendications**

1. Procédé de mesure d'une contamination radioactive d'un objet (6, 24) à mesurer ayant des produits de fission et d'activation, contenant comme nucléide traceur du Co-60, provenant d'une installation de génie nucléaire dans lequel on détecte par au moins deux détecteurs ($4_1$ à $4_4$) gamma des quanta ($\gamma_1$, $\gamma_2$) gamma émis simultanément par l'objet (6, 24) à mesurer et dans lequel on détermine des quanta ($\gamma_1$, $\gamma_2$) gamma détectés en coïncidence dans ces détecteurs ($4_1$ à $4_4$) gamma, en déduisant des événements détectés en coïncidence dans les deux détecteurs ($4_1$ à $4_4$) gamma dans une fenêtre ($t_k$) de temps de coïncidence un taux de comptage ($M_{ij}$) de coïncidence et en en tirant parti pour déterminer l'activité (A).

2. Procédé suivant la revendication 1, dans lequel on déduit des taux de comptage ($R_i$) des détecteurs ($4_1$ à $4_4$) gamma un taux de comptage ($Z_{ij}$) de coïncidence aléatoire et on tire parti des taux de comptage ($M_{ij}$) de coïncidence mesurés pour la détermination d'un taux de comptage ($K_{ij}$) de coïncidence corrigé en tant que mesure de l'activité (A).

3. Procédé suivant l'une des revendications précédentes, dans lequel on utilise pour la mesure des taux de comptage ($M_{ij}$) de coïncidence seulement des événements qui appartiennent à une fenêtre ($E_1$ à $E_4$) d'énergie donnée à l'avance.

4. Procédé suivant la revendication 3, dans lequel les fenêtres ($E_1$ à $E_4$) d'énergie associées aux détecteurs ($4_1$ à $4_4$) gamma sont les mêmes.

5. Procédé suivant la revendication 3 ou 4, dans lequel les fenêtres ($4_1$ à $4_4$) d'énergie sont réglées pour la détection sélective en énergie du rayonnement ($\gamma_1$, $\gamma_2$) gamma se créant par la décomposition radioactive du Co-60.

6. Procédé suivant la revendication 5, dans lequel on utilise comme détecteur ($4_1$ à $4_4$) gamma des compteurs de scintillation organiques.

7. Dispositif de mesure d'une contamination radioactive contenant du Co-60 comme nucléide traceur d'un objet (6, 24) à mesurer, comprenant au moins deux détecteurs ($4_1$ à $4_4$) gamma de détection des quanta ($\gamma_1$, $\gamma_2$) gamma émis par l'objet (6, 24) à mesurer, en prévoyant comme détecteurs ($4_1$ à $4_4$) gamma des compteurs de scintillation organiques, et comprenant un dispositif (10) d'évaluation pour déterminer les quanta ($\gamma_1$, $\gamma_2$) gamma détectés en coïncidence par ces détecteurs ($4_1$ à $4_4$) gamma, qui comprend un compteur (14) de coïncidence pour déterminer un taux de comptage ($M_{ij}$) de coïncidence mesuré, ainsi qu'un dispositif (16) de calcul pour déduire un taux de comptage ($Z_{ij}$) de coïncidence aléatoire à partir des taux de comptage ($R_i$) individuels des détecteurs ($4_1$ à $4_4$) gamma et pour déterminer un taux de comptage ($K_{ij}$) de coïncidence corrigé en formant la différence entre le taux de comptage ($M_{ij}$) de coïncidence mesuré et le taux de comptage ($K_{ij}$) de coïncidence aléatoire.

8. Dispositif suivant la revendication 7, dans lequel les détecteurs ($4_1$ à $4_4$) gamma sont disposés en ayant leurs fenêtres ($5_1$ à $5_4$) d'entrée de façon à former une chambre (2) de mesure se trouvant entre les détecteurs ($4_1$ à $4_4$) gamma pour la réception de l'objet (6) à mesurer.

9. Dispositif suivant la revendication 7, dans lequel les fenêtres ($5_1$ à $5_4$) d'entrée des détecteurs ($4_1$ à $4_4$) gamma sont disposées dans un plan commun.

10. Dispositif suivant la revendication 9, dans lequel il est interposé un écran (20) entre les détecteurs ($4_1$ à $4_4$) gamma.

11. Dispositif suivant l'une des revendications 7 à 10, dans lequel les fenêtres ($E_1$ à $E_4$) d'énergie des détecteurs ($4_1$ à $4_4$) gamma sont réglées pour la détection sélective en énergie du rayonnement ($\gamma_1$, $\gamma_2$) gamma se formant par la décomposition radioactive du Co-60.

12. Dispositif suivant l'une des revendications 7 à 11, dans lequel il est utilisé comme détecteurs ($4_1$ à $4_4$) gamma des compteurs de scintillation en matière plastique ou liquides.

$$Z_{ij} = R_i \cdot R_j \cdot t_k \qquad k_{ij} = M_{ij} - Z_{ij}$$

Fig. 1

Fig. 2